# EUROPEAN PATENT APPLICATION

(11) **EP 4 775 741 A1**
(43) Date of publication of application: **15.07.2026**
(21) Application number: 24862525.3
(22) Date of filing: 09.08.2024
(51) Int. Cl.: E02F 9/00, B60K 11/04

(54) **WORK MACHINE**

(30) Priority: 04.09.2023 JP 2023142851
(71) Applicant: Kubota Corporation, Osaka-shi, Osaka 530-0011 (JP)
(72) Inventor: HORII, Hiroshi, Sakai-shi, Osaka 590-0908 (JP); NISHIGORI, Yoichi, Sakai-shi, Osaka 590-0908 (JP)
(74) Representative: Cabinet Beau de Loménie
(86) International application number: PCT/JP2024/028681
(87) International publication number: WO 2025/052871

(57) **Abstract**

The present disclosure relates to a work machine. A work machine of the present disclosure includes a machine body including a slewing base and an engine compartment formed on the slewing base, an engine housed in the engine compartment, a cooling fan that generates cooling air cooling the engine, and a flow rectifying body that rectifies the cooling air flowing between an inner side surface of a partition plate in the engine compartment and the engine. In the work machine, the slewing base is disposed on a lower portion of the machine body. In the work machine, the flow rectifying body is inserted into a space between the engine and the inner side surface from below the machine body through an opening formed in the slewing base, and is fixed to a lower surface of the slewing base.

## Description

### TECHNICAL FIELD

The present invention relates to a work machine, such as a backhoe. The present application claims priority based on Japanese Patent Application No. 2023-142851 filed on September 4, 2023, the entire contents of which are incorporated herein by reference.

### BACKGROUND ART

A work machine disclosed in PATENT LITERATURE 1 has conventionally been known. The work machine disclosed in PATENT LITERATURE 1 is a backhoe, and includes a slewing base, a prime mover compartment formed on the slewing base, a prime mover housed in the prime mover compartment, and a cooling fan that generates cooling air for cooling the prime mover in the prime mover compartment. The work machine allows the cooling air to flow between the prime mover and a partition plate partitioning the prime mover compartment, and cool the prime mover.

### CITATION LIST

### [PATENT LITERATURE]

PATENT LITERATURE 1: Japanese Laid-Open Patent Publication No. 2019-019574

### SUMMARY OF THE INVENTION

### [SOLUTION TO PROBLEM]

A work machine according to one aspect of the present disclosure includes a machine body including a base and a prime mover compartment formed on the base, a prime mover housed in the prime mover compartment, a cooling fan that generates cooling air cooling the prime mover, and a flow rectifying body that rectifies the cooling air flowing between an inner side wall of the prime mover compartment and the prime mover, in which the base is disposed on a lower portion of the machine body, and the flow rectifying body is inserted into a space between the prime mover and the inner side wall from below the machine body through an opening formed in the base, and is fixed to a lower surface of the base.

The present disclosure can ensure the maintainability of the flow rectifying body in the work machine in which the flow rectifying body is provided below the prime mover in the prime mover compartment.

### BRIEF DESCRIPTION OF DRAWINGS

[FIG. 1] FIG. 1 is a perspective view schematically illustrating a work machine according to one embodiment of the present disclosure.
[FIG. 2] FIG. 2 is a right side view schematically illustrating the work machine according to the one embodiment of the present disclosure.
[FIG. 3] FIG. 3 is a partial plan view schematically illustrating the work machine according to the one embodiment of the present disclosure.
[FIG. 4] FIG. 4 is a perspective view illustrating a machine body.
[FIG. 5] FIG. 5 is a perspective view illustrating a slewing frame.
[FIG. 6] FIG. 6 is a schematic sectional view illustrating an arrangement of a flow rectifying body in an engine compartment.
[FIG. 7] FIG. 7 is a perspective view illustrating the flow rectifying body.
[FIG. 8] FIG. 8 is a perspective view illustrating an attachment state (when viewed from above) of the flow rectifying body to a slewing base.
[FIG. 9] FIG. 9 is a perspective view illustrating the slewing base (when viewed from above) in a state in which the flow rectifying body and an inspection panel are removed.
[FIG. 10] FIG. 10 is a perspective view illustrating the attachment state (when viewed from below) of the flow rectifying body to the slewing base.
[FIG. 11] FIG. 11 is a perspective view illustrating an attachment state (when viewed from below) of a flow rectifying body according to another embodiment to a slewing base.

### DETAILED DESCRIPTION

### <Technical problem>

Work machines have been known to have a configuration in which a flow rectifying body is disposed in a prime mover compartment in order to ensure the cooling efficiency in a prime mover by cooling air. The flow rectifying body rectifies the flow of the cooling air in the prime mover compartment. Such a flow rectifying body is sometimes disposed below the prime mover in the prime mover compartment. In this case, the flow rectifying body is located behind the prime mover accordingly, which makes it difficult for a user to access the flow rectifying body. Hence, it is difficult to ensure the maintainability of the flow rectifying body disposed below the prime mover in the prime mover compartment.

An object of the present disclosure is to ensure maintainability of a flow rectifying body in a work machine in which the flow rectifying body is provided below a prime mover in a prime mover compartment.

### <Advantageous effects of the invention>

According to the work machine of the present disclosure, it is possible to ensure the maintainability of the flow rectifying body in the work machine in which the flow rectifying body is provided below the prime mover in the prime mover compartment.

### <Outline of embodiments of present disclosure>

Hereunder, an outline of embodiments of the invention of the present disclosure will be listed and described.
(1) A work machine of the present disclosure includes a machine body including a base and a prime mover compartment formed on the base, a prime mover housed in the prime mover compartment, a cooling fan that generates cooling air cooling the prime mover, and a flow rectifying body that rectifies the cooling air flowing between an inner side wall of the prime mover compartment and the prime mover, in which the base is disposed on a lower portion of the machine body, and the flow rectifying body is inserted into a space between the prime mover and the inner side wall from below the machine body through an opening formed in the base, and is fixed to a lower surface of the base.
   With the work machine having the above configuration, the flow rectifying body can be pulled out downward from the machine body. Hence, according to the work machine having the above configuration, it is possible to ensure the maintainability of the flow rectifying body in the work machine in which the flow rectifying body is provided below the prime mover in the prime mover compartment.
(2) It is preferable that, in the work machine according to the mode (1), the flow rectifying body includes a body portion having a form occupying at least a part of the space in a state in which the body portion is inserted into the space, and a flange portion located below the base and in contact with the lower surface of the base around the opening in a state in which the body portion is inserted into the space, and the flange portion be fixed to the lower surface of the base with a fixing member attachable to and detachable from the lower surface of the base. With the work machine having the above configuration, it is possible to pull out downward the flow rectifying body from the machine body by removing the fixing member from the lower surface of the machine body. Hence, according to the work machine having the above configuration, it is possible to ensure the maintainability of the flow rectifying body in the work machine in which the flow rectifying body is provided below the prime mover in the prime mover compartment.
(3) It is preferable that the work machine according to the mode (1) or (2) include a first rib and a second rib that are provided on the base in the prime mover compartment, the first rib and the second rib being parallel to each other and orthogonal to the inner side wall, in which the flow rectifying body is inserted into a region, in the space, sandwiched by the first rib and the second rib. According to the work machine having such a configuration, it is possible to rectify the cooling air flowing around the first rib and the second rib by the flow rectifying body.
(4) It is preferable that, in the work machine according to the mode (3), the inner side wall, the first rib, and the second rib include a sealing portion that seals a gap between the flow rectifying body and the inner side wall, a gap between the flow rectifying body and the first rib, and a gap between the flow rectifying body and the second rib. With the work machine having such a configuration, it is possible to control the cooling air flowing into the gap between the inner side wall and the flow rectifying body, the gap between the first rib and the flow rectifying body, and the gap between the second rib and the flow rectifying body. According to the work machine having such a configuration, it is possible to reliably rectify the cooling air flowing around the first rib and the second rib by the flow rectifying body.
(5) It is preferable that, in the work machine according to any one of the modes (1) to (4), the inner side wall extend in a left-right direction of the machine body. According to the work machine having such a configuration, it is possible to ensure the maintainability of the flow rectifying body in the work machine in which the prime mover of a transverse type is included, and the flow rectifying body is provided below the prime mover in the prime mover compartment.
(6) It is preferable that, in the work machine according to any one of the modes (1) to (5), the cooling fan send the cooling air in a direction substantially parallel to the inner side wall. In the work machine including the prime mover of a transverse type, in which the flow rectifying body is provided below the prime mover in the prime mover compartment, it is possible to reliably cool the prime mover by the cooling air.
(7) It is preferable that, in the work machine according to any one of the modes (1) to (6), the work machine further include an inspection port formed on the base for inspection of the prime mover, and an inspection panel that covers the inspection port and is installed on the lower surface of the base, in which the flow rectifying body is formed into an integrated body with the inspection panel. With the work machine having the above configuration, it is possible to attach and detach the flow rectifying body simultaneously with attachment and detachment of the inspection panel. According to the work machine having such a configuration, it is possible to improve the maintainability of the flow rectifying body in the work machine in which the flow rectifying body is provided below the prime mover in the prime mover compartment.
(8) It is preferable that, in the work machine according to the mode (7), the opening be included in a part of the inspection port. With the work machine having such a configuration, it is possible to use the opening also as the inspection port of the prime mover. According to the work machine having such a configuration, it is possible to improve the maintainability of the prime mover in the work machine in which the flow rectifying body is provided below the prime mover in the prime mover compartment.

### <Details of embodiments of invention of present disclosure>

Hereunder, details of embodiments of the present disclosure will be described with reference to the drawings. Note that at least some of the embodiments described below may be freely combined.

### [Overall configuration of work machine]

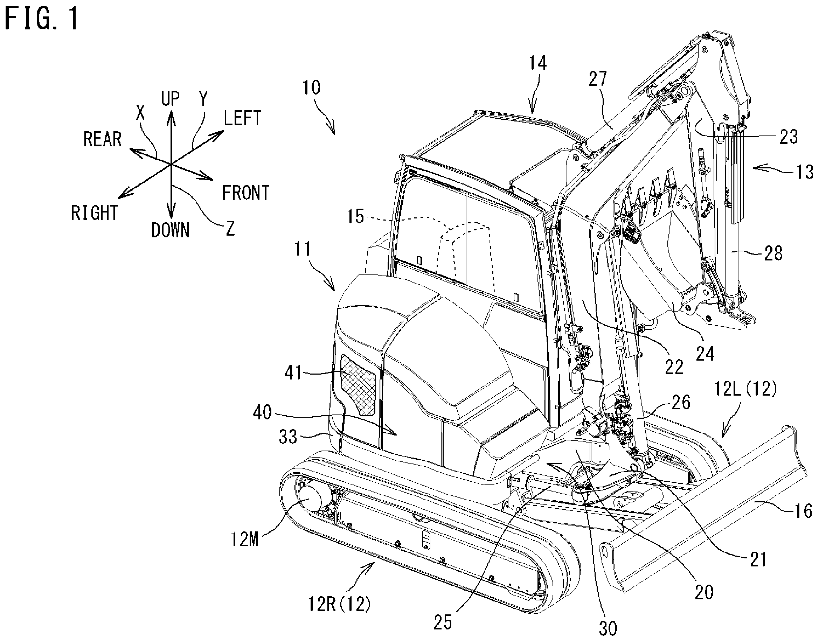

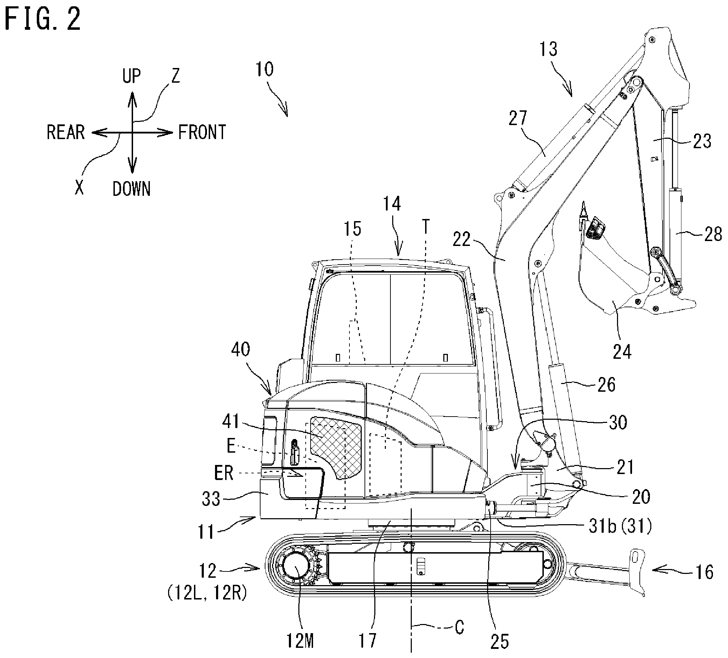

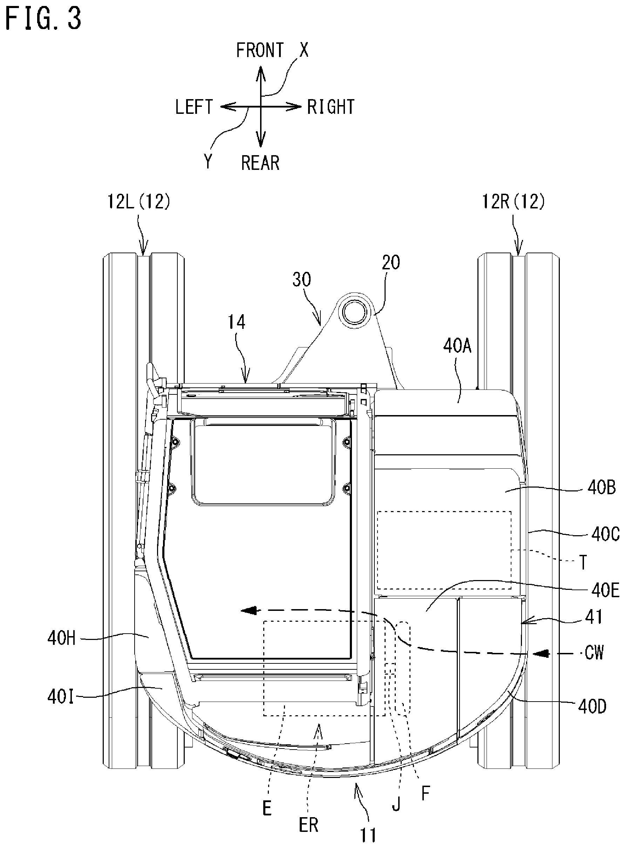

FIG. 1 is a perspective view schematically illustrating a work machine 10 according to one embodiment of the present disclosure. FIG. 2 is a right side view schematically illustrating the work machine 10 according to the one embodiment of the present disclosure. FIG. 3 is a partial plan view schematically illustrating the work machine 10 according to the one embodiment of the present disclosure. FIGS. 1 to 3 illustrate the work machine 10, which is the one embodiment of the work machine of the present disclosure. The work machine 10 exemplified in the present embodiment is a backhoe. As illustrated in FIG. 1, the work machine 10 includes a machine body 11, a traveling device 12, a working device 13, a cabin 14, and an operator's seat 15 disposed in the cabin 14. The work machine 10 may have a configuration including a canopy in place of the cabin 14.

In the following description, with respect to the operator seated on the operator's seat 15, a direction toward the front side of the operator is referred to as the front of the work machine 10, and a direction toward the rear side is referred to as the rear thereof. The front-rear direction of the work machine 10 is indicated by an arrow X. Further, in the following description, a direction toward the left side of the operator seated on the operator's seat 15 is referred to as the left of the work machine 10, and a direction toward the right side is referred to as the right of the work machine 10. The left-right direction of the work machine 10 is indicated by an arrow Y. The left-right direction of the work machine 10 is also referred to as a width direction. Furthermore, in the following description, an up-down direction of the work machine 10 is indicated by an arrow Z. The up-down direction of the work machine 10 is orthogonal to the front-rear direction and the left-right direction.

As illustrated in FIGS. 1 to 3, the traveling device 12 is a crawler-type traveling device that supports the machine body 11 in a travelable manner. The traveling device 12 includes a first traveling device 12L provided on the left side of the machine body 11, and a second traveling device 12R provided on the right side. The first traveling device 12L and the second traveling device 12R are driven by a hydraulic motor 12M. In the present embodiment, the crawler-type traveling device 12 is used; however, the configuration of the traveling device in the work machine of the present disclosure is not limited thereto, and a traveling device of a wheel-type or the like may be used. The work machine 10 further includes a dozer device 16. The dozer device 16 is provided in front of the traveling device 12. The dozer device 16 may be provided on the front and rear portions of the work machine 10.

As illustrated in FIG. 2, the machine body 11 is provided on the traveling device 12 with a slewing bearing 17 interposed therebetween. The slewing bearing 17 supports the machine body 11 on the traveling device 12. The machine body 11 is configured to be turnable about a slewing axis C that the slewing bearing 17 has.

As illustrated in FIGS. 1 and 2, the work machine 10 includes, in front of the machine body 11, a support bracket 20 and a swing bracket 21 that support the working device 13. The support bracket 20 is a part of a slewing frame 30, and is provided to protrude forward of the machine body 11. The support bracket 20 includes a through-hole extending in the up-down direction, and a vertical shaft member inserted into the through-hole. The swing bracket 21 is supported by the vertical shaft member of the support bracket 20, and is configured to be swingable around the vertical shaft member. The swing bracket 21 swings as a swing cylinder 25 expands and contracts. The swing bracket 21 includes a first horizontal shaft member extending in a direction orthogonal to the up-down direction.

The working device 13 includes a boom 22, an arm 23, and a bucket 24. A base portion of the boom 22 is supported by the first horizontal shaft member of the swing bracket 21, and is configured to be pivotable around the first horizontal shaft member. The boom 22 swings as a boom cylinder 26 extends and contracts. The boom 22 includes, on its end side, a second horizontal shaft member extending in a direction orthogonal to the up-down direction. The arm 23 is supported by the second horizontal shaft member of the boom 22, and is configured to be pivotable around the second horizontal shaft member. The arm 23 swings as an arm cylinder 27 extends and contracts. The arm 23 includes, on its end side, a third horizontal shaft member extending in a direction orthogonal to the up-down direction. The bucket 24 is supported by the third horizontal shaft member of the arm 23, and is configured to be pivotable around the third horizontal shaft member. The bucket 24 swings as a bucket cylinder 28 extends and contracts. The swing cylinder 25, the boom cylinder 26, the arm cylinder 27, and the bucket cylinder 28 are configured with hydraulic cylinders (hydraulic actuators). Note that the work machine 10 may have a configuration capable of attaching another working tool (hydraulic attachment) in place of the bucket 24.

### [Machine body]

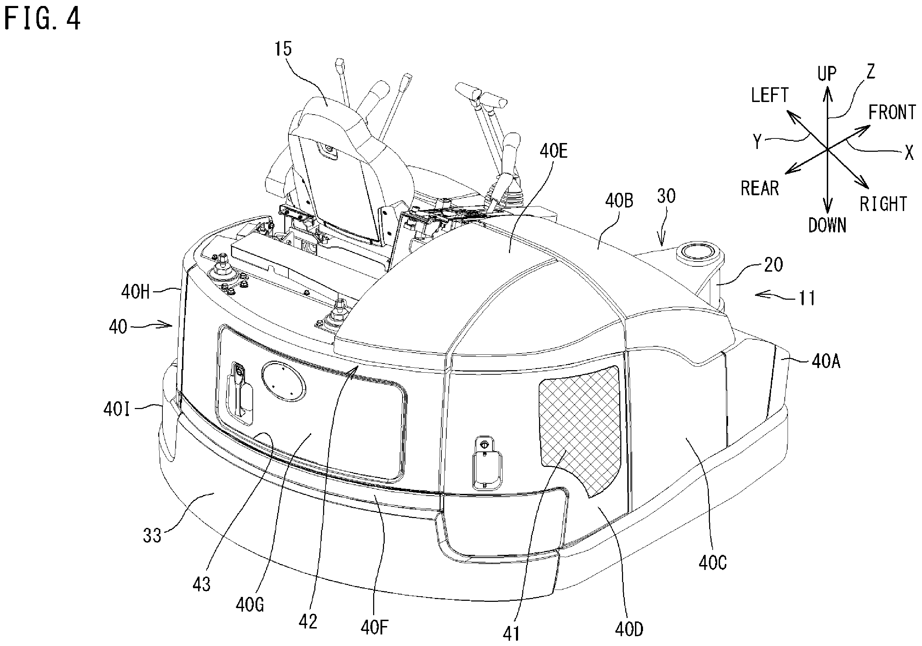

FIG. 4 is a perspective view illustrating the machine body 11. As illustrated in FIGS. 2 to 4, the machine body 11 includes an engine (prime mover) E, a cooling fan F, a fuel tank T, the slewing frame 30, and a cover 40. The slewing frame 30 and the cover 40 constitute an outer shell of the machine body 11. The machine body 11 has the engine E, the cooling fan F, the fuel tank T, and other various devices mounted inside the outer shell constituted by the slewing frame 30 and the cover 40.

The engine E is a driving source that drives each part of the work machine 10. The engine E of the present embodiment is a diesel engine. The engine E may be a gasoline engine. In the present embodiment, the engine (internal combustion engine) is exemplified as the prime mover; however, the prime mover forming the work machine of the present disclosure may be an electric motor, or may be a hybrid engine including an engine and an electric motor. The engine E is mounted in the rear portion of the machine body 11 in an orientation with an output shaft J facing in the left-right direction.

The cooling fan F is turned by the drive of the engine E and generates cooling air CW. The cooling fan F is fixed on the output shaft J of the engine E. The cooling fan F of the present embodiment is disposed on the right side of the engine E. The cooling fan F causes air sucked from the right side of the machine body 11 to flow toward the engine E, and generates the cooling air CW flowing from the right side to the left side.

The fuel tank T stores fuel (light oil) of the engine E. The fuel tank T is disposed in front of the engine E.

While detailed description is omitted in the present description, the machine body 11 further includes various devices, such as a radiator, an oil cooler, a fuel cooler, a slewing motor, a battery, a hydraulic pump, an exhaust gas purification device, an air cleaner, a hydraulic fluid tank, and a control valve, which are not illustrated. The radiator is a cooler that cools a coolant of the engine E. The oil cooler is a cooler that cools hydraulic fluid returning from the hydraulic actuators, such as the hydraulic cylinders and the hydraulic motor. The fuel cooler is a cooler that cools the fuel. These coolers are cooled by the cooling air CW generated by the cooling fan F. The slewing motor is a driving source that drives the machine body 11 around the slewing axis C. The battery supplies electric power to electrical components mounted on the work machine 10. The hydraulic pump is driven by power of the engine E, and discharges hydraulic fluid for driving the hydraulic motor, the hydraulic cylinders, and the like, and hydraulic oil for signals, for pilot pressure for operating hydraulic valves, and the like. The exhaust gas purification device is a device (DPF) that purifies exhaust gas emitted from the engine E. The air cleaner is a device that purifies air supplied to the engine E. The hydraulic fluid tank is a tank that stores hydraulic fluid. The hydraulic fluid is delivered to the hydraulic pump from the hydraulic fluid tank. The control valve controls the flow rate of the hydraulic fluid supplied to the hydraulic actuators from the hydraulic pump.

### [Cover]

As illustrated in FIGS. 3 and 4, the cover 40 constitutes the outer shell of the machine body 11 together with the slewing frame 30. The cover 40 covers the front, rear, left, and right side surfaces and the upper surface of the machine body 11. The cover 40 includes a plurality of covers. The cover 40 of the present embodiment includes a total of nine covers (first cover 40A to ninth cover 40I).

The first cover 40A is disposed at a right-front portion of the machine body 11. The second cover 40B extends upward and rearward from an upper portion of the first cover 40A, and covers the area above the fuel tank T. The second cover 40B is configured to be openable and closeable, and is used for refueling the fuel tank T and for inspection and maintenance of the fuel tank T and the like. The third cover 40C covers the area on the right side of the fuel tank T. The third cover 40C is configured to be openable and closeable, and is used for inspection and maintenance of the fuel tank T. The fourth cover 40D is disposed at a right-rear portion of the machine body 11. The fourth cover 40D has an outside air introduction portion 41 formed for taking outside air into the fourth cover 40D. The air (cooling air CW) sucked by the cooling fan F is introduced from the outside air introduction portion 41. The fifth cover 40E covers the area on the right side of the engine E and the area above the cooling fan F. The sixth cover 40F and the seventh cover 40G cover the area at the back of the engine E. The sixth cover 40F is disposed on an opening 43 formed in the seventh cover 40G. The seventh cover 40G is supported on the sixth cover 40F via a hinge (not illustrated). The seventh cover 40G opens and closes the opening 43. The eighth cover 40H is disposed at a left-rear portion of the machine body 11. The ninth cover 40I is disposed below the eighth cover 40H.

### [Slewing frame]

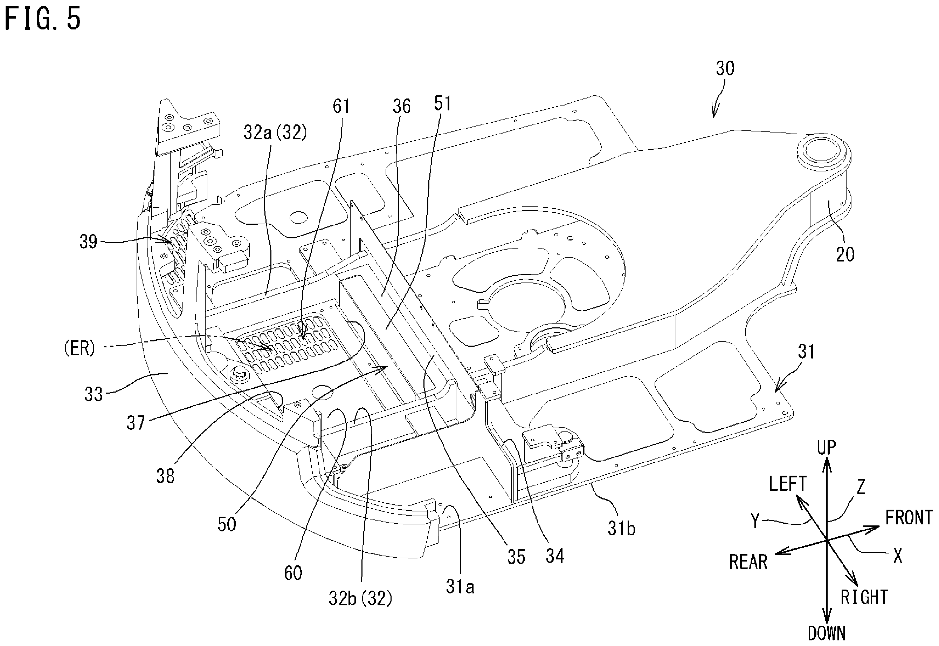

FIG. 5 is a perspective view illustrating the slewing frame 30. As illustrated in FIG. 4, the slewing frame 30 constitutes the outer shell of the machine body 11 together with the cover 40. The slewing frame 30 constitutes a lower portion of the machine body 11. As illustrated in FIG. 5, the slewing frame 30 includes a slewing base (base) 31, a reinforcing rib 32, a weight 33, and the support bracket 20. While the slewing frame 30 further includes a bracket and a stay (neither of them is illustrated) for attaching various devices and components mounted in the machine body 11, illustration and description thereof are omitted.

The slewing base 31 constitutes a lower portion of the slewing frame 30. In other words, the slewing base 31 constitutes the lower portion of the machine body 11. The slewing base 31 is made of a thick steel plate or the like, and includes an upper surface 31a and a lower surface 31b. The slewing base 31 is used in an orientation in which the upper surface 31a faces upward and the lower surface 31b faces downward. As illustrated in FIG. 2, the slewing base 31 is supported by the traveling device 12 with the slewing bearing 17 interposed therebetween. The slewing base 31 is configured to be turnable around the slewing axis C of the slewing bearing 17.

As illustrated in FIG. 5, the slewing frame 30 includes the reinforcing rib 32. The slewing frame 30 is reinforced by the reinforcing rib 32 to ensure a desired strength. The reinforcing rib 32 is made of a steel plate. The reinforcing rib 32 extends in the front-rear direction and is provided upright, on the upper surface 31a of the slewing base 31. The reinforcing rib 32 includes a first rib 32a provided closer to the left side on the upper surface 31a, and a second rib 32b provided closer to the right side on the upper surface 31a.

As illustrated in FIGS. 1, 2, and 5, the support bracket 20 constitutes a part of the slewing frame 30. The support bracket 20 is fixed in front of the reinforcing rib 32, and supports the working device 13. The weight 33 is attached to a rear portion of the slewing base 31, and constitutes the rear portion of the machine body 11.

As illustrated in FIG. 5, the slewing frame 30 further includes a partition plate 34. The partition plate 34 is made of a steel plate, and is provided upright on the upper surface 31a at a middle portion in the front-rear direction. The partition plate 34 is provided to extend in the left-right direction so as to be orthogonal to the first rib 32a and the second rib 32b. The partition plate 34 defines a space inside the machine body 11 covered with the cover 40 (see FIG. 4), and forms an engine compartment (prime mover compartment) ER behind the partition plate 34. In the following description, a side surface on the rear side of the partition plate 34 is referred to as an inner side surface 35. A flow direction of the cooling air CW generated by the cooling fan F is substantially parallel to the inner side surface 35.

The slewing frame 30 further includes a sealing portion 36. The sealing portion 36 is made of a plate-like member extending from the respective surfaces of the partition plate 34, the first rib 32a, and the second rib 32b in a direction orthogonal to these surfaces.

The slewing frame 30 further includes an opening 37 and an inspection port 38. The opening 37 and the inspection port 38 extend through the slewing base 31 in the up-down direction. The opening 37 and the inspection port 38 allow the outside of (below) the machine body 11 and the inside (engine compartment ER to be described later) of the machine body 11 to communicate.

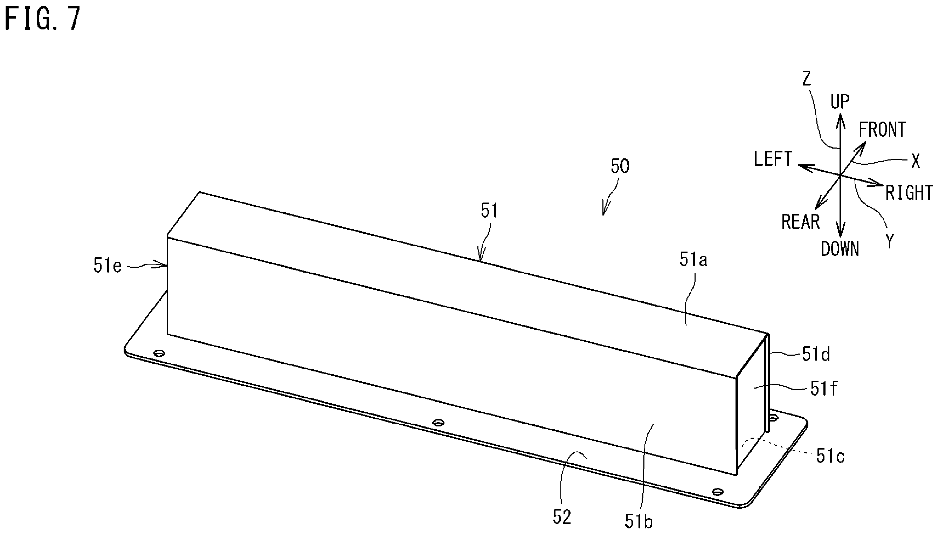

The opening 37 is an opening for inserting a flow rectifying body 50 (to be described later; see FIG. 7) into the machine body 11. The opening 37 is sealed by disposing the flow rectifying body 50.

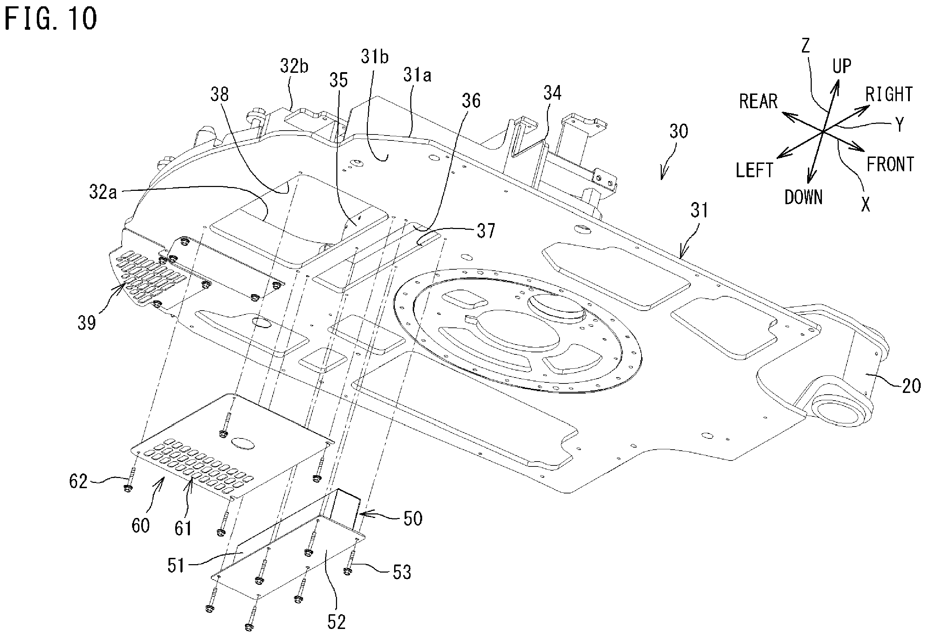

The inspection port 38 is an opening to be used at the time of inspection of the engine E housed in the engine compartment ER. The inspection port 38 is sealed by disposing an inspection panel 60 (to be described later; see FIG. 10). The slewing frame 30 is provided with an exhaust portion 39 consisting of a large number of holes for discharging the cooling air CW and exhaust gas that comes from the exhaust gas purification device, to the outside of the machine body 11. Further, the inspection panel 60 is provided with an exhaust portion 61 consisting of a large number of holes for discharging the cooling air CW and the exhaust gas that comes from the exhaust gas purification device, to the outside of the machine body 11.

### [Detailed configuration of engine compartment]

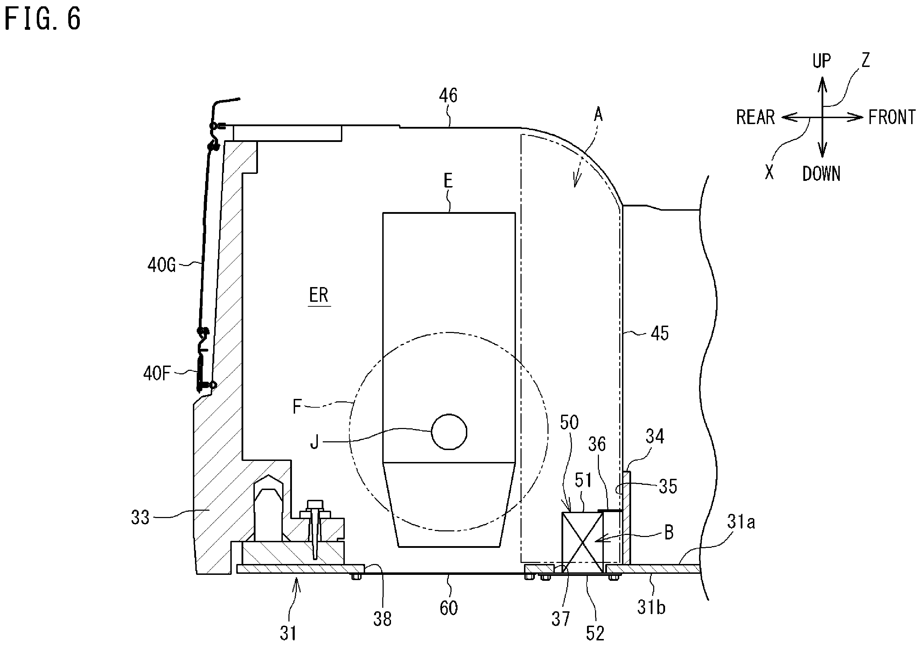

FIG. 6 is a schematic sectional view illustrating the arrangement of the flow rectifying body 50 in the engine compartment ER. As illustrated in FIG. 6, the partition plate 34 defines the space in the machine body 11, and forms the engine compartment ER. The engine compartment ER is a space surrounded by the slewing base 31 located below, the partition plate 34 and a front plate 45 located in front, an upper plate 46 located above, the cover 40 located laterally on the left and right sides, and the weight 33 located at the back. The engine compartment ER houses the engine E.

The engine E is housed in the engine compartment ER in an orientation with the output shaft J facing in the left-right direction. In other words, in the work machine 10 of the present embodiment, the engine E is a transverse type. In the work machine 10, the inner side surface 35 of the partition plate 34 extends in the left-right direction of the machine body 11. The partition plate 34 is opposed to the front side of the engine E, which is the transverse type.

The machine body 11 has a space A in the engine compartment ER. The space A is a space, of the spaces in the engine compartment ER, located between the engine E, and the partition plate 34 and the front plate 45. The space A is surrounded by the slewing base 31 from below, and by the cover 40 from above and its left and right sides. The space A is a passage through which part of the cooling air CW generated by the cooling fan F passes. The front surface side of the engine E is cooled by the cooling air CW flowing from the right side to the left side in the space A.

### [Flow rectifying body]

FIG. 7 is a perspective view illustrating the flow rectifying body 50. As illustrated in FIG. 7, the flow rectifying body 50 includes a body portion 51 and a flange portion 52. The flow rectifying body 50 is made of a steel plate. The body portion 51 has a rectangular parallelepiped form, and includes a first side plate 51a, a second side plate 51b, a third side plate 51c, a fourth side plate 51d, a fifth side plate 51e, and a sixth side plate 51f. The body portion 51 is used in an orientation in which the first side plate 51a faces upward, the second side plate faces forward, the third side plate faces downward, the fourth side plate 51d faces rearward, the fifth side plate 51e faces leftward, and the sixth side plate 51f faces rightward. The body portion 51 is inserted into the space A inside the machine body 11. In the following description, a space, in the space A, occupied by the body portion 51, in a state in which the body portion 51 is inserted into the space A, is referred to as a space B.

The flange portion 52 is disposed on a lower portion of the body portion 51. The flange portion 52 is disposed around the third side plate 51c. The flange portion 52 has a form protruding outward with respect to the first side plate 51a when the flow rectifying body 50 is seen in the direction orthogonal to the first side plate 51a. The outer shape of the flange portion 52 is larger than the outer shape of the opening 37 (see FIG. 6). Hence, the flange portion 52 does not enter the inside of the machine body 11 from the opening 37. The flow rectifying body 50 illustrated in the present embodiment has a substantially rectangular parallelepiped shape as a whole; however, the form of the flow rectifying body forming the work machine 10 of the present disclosure is not limited thereto.

### [Attachment state of flow rectifying body in machine body]

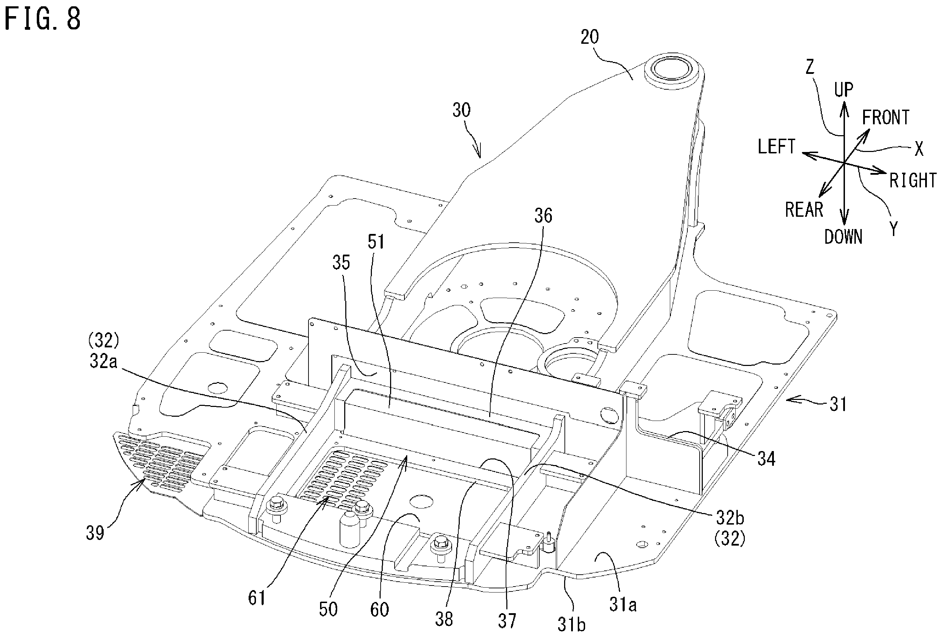

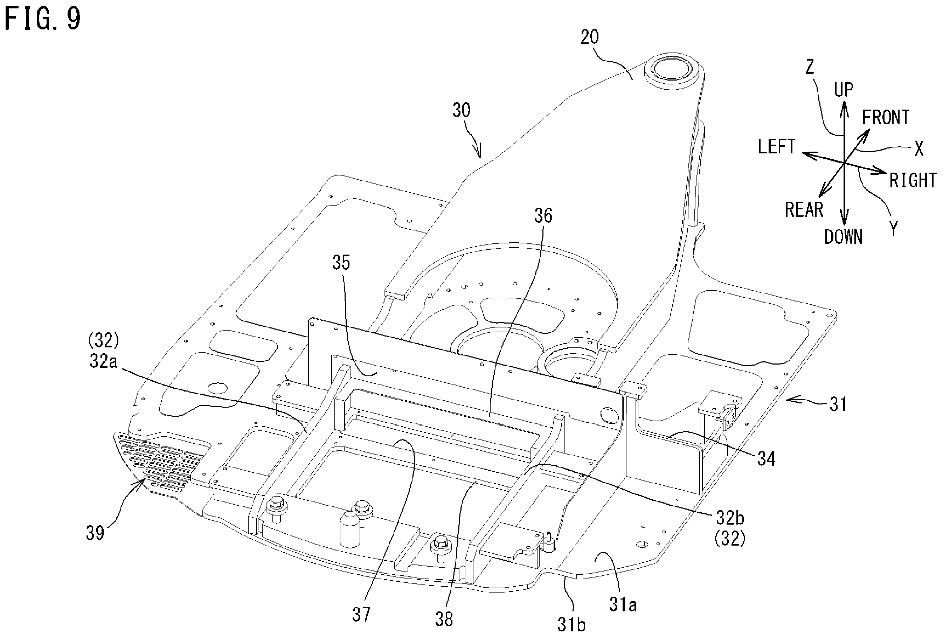

FIG. 8 is a perspective view illustrating an attachment state (when viewed from above) of the flow rectifying body 50 to the slewing base 31. FIG. 9 is a perspective view illustrating the slewing base 31 (when viewed from above) in a state in which the flow rectifying body 50 and the inspection panel 60 are removed. FIG. 10 is a perspective view illustrating the attachment state (when viewed from below) of the flow rectifying body 50 to the slewing base 31. As illustrated in FIGS. 6 and 8 to 10, the opening 37 is provided at a position where the outside of (below) the machine body 11 and the space A in the engine compartment ER communicate. The flow rectifying body 50 is inserted into the opening 37 from below the machine body 11.

The body portion 51 of the flow rectifying body 50 is inserted into the machine body 11 (space A) from the opening 37. The body portion 51 is inserted into the space A to a predetermined depth. The body portion 51 occupies the space B that is a part of the space A, in a state in which the body portion 51 is inserted into the space A to a predetermined depth. The flange portion 52 of the flow rectifying body 50 is located outside the machine body 11 in the state in which the body portion 51 is inserted into the space A to a predetermined depth. At this time, the flange portion 52 is in contact with the lower surface 31b around the opening 37. The flange portion 52 is fastened to the lower surface 31b of the slewing base 31 with bolts (fixing members) 53. The flow rectifying body 50 is fixed to the lower surface 31b of the slewing base 31 with the bolts 53. The flow rectifying body 50 can be attached to and detached from the opening 37 by attaching and detaching the bolts 53.

As illustrated in FIG. 10, the flow rectifying body 50 can be pulled out downward from the opening 37 of the machine body 11 by unfastening the bolts 53. Hence, if the work machine 10 of the present embodiment is configured such that a user's hand does not reach the flow rectifying body 50 from the inner side (above and left and right sides) of the machine body 11, the flow rectifying body 50 can be accessed from below the machine body 11 and the flow rectifying body 50 can be removed from the machine body 11.

As illustrated in FIGS. 6 and 8 to 10, the inspection port 38 is provided immediately below the engine E mounted in the engine compartment ER. The inspection port 38 is an opening to be used at the time of inspection of the engine E, and is sealed by the inspection panel 60. The inspection panel 60 is fastened to the lower surface 31b of the slewing base 31 with bolts 62. The inspection panel 60 allows the inspection port 38 to be opened and closed by attaching and detaching the bolts 62.

In the work machine 10 of the present embodiment, of the flow rectifying body 50, the body portion 51 is inserted into the space A between the engine E and the partition plate 34 from below the machine body 11 through the opening 37, and the flange portion 52 is fixed to the lower surface 31b around the opening 37. The body portion 51 occupies the space B that is a part of the space A, in the state in which the body portion 51 is inserted into the space A. The flange portion 52 is located below the slewing base 31 and is in contact with the lower surface 31b of the slewing base 31 around the opening 37 in a state in which the body portion 51 is inserted into the space B. The flange portion 52 is fixed to the lower surface 31b of the slewing base 31 with the bolts 53 attachable to and detachable from the lower surface 31b of the slewing base 31.

For example, in a case that, in conventional work machines, the flow rectifying body is disposed on the lower portion of the engine compartment, if the upper and left and right covers of the machine body are removed, it is difficult for a user to access the flow rectifying body located behind the engine. Hence, in the conventional work machine, it is difficult to perform maintenance of the flow rectifying body disposed on the lower portion of the engine compartment. On the other hand, as illustrated in FIG. 6, in the work machine 10 of the present embodiment, although the flow rectifying body 50 is disposed on the lower portion of the engine compartment ER, the flow rectifying body 50 can be drawn down to below the machine body 11. Further, in the work machine 10 of the present embodiment, the flow rectifying body 50 does not need to perform the work of detaching the fixing members, such as bolts, in the engine compartment ER, and can be pulled out downward from the machine body 11 by removing the bolts 53 fastened to the lower surface 31b of the machine body 11. Hence, the work machine 10, including the flow rectifying body 50, of the present embodiment can ensure the maintainability of the flow rectifying body 50 in the configuration in which the flow rectifying body 50 is provided below the engine E in the engine compartment ER.

### [Rectifying effect of cooling air by flow rectifying body]

The cooling efficiency of the engine E deteriorates as the wind speed of the cooling air CW hitting the engine E decreases. The engine E is appropriately cooled by the cooling air CW hitting a desired position of the engine E. The work machine 10 is provided with the flow rectifying body 50 in order to increase the wind speed of the cooling air CW hitting the engine E and allow the cooling air CW to hit a desired position of the engine E. The work machine 10 of the present disclosure allows the sectional area of the space A in the flow direction of the cooling air CW to be reduced by providing the flow rectifying body 50 inside the space A, thereby ensuring the wind speed of the cooling air CW. Further, the work machine 10 of the present disclosure allows the flow of the cooling air CW to be rectified so as to hit a desired position of the engine E by providing the flow rectifying body 50 inside the space A.

In the work machine 10, the flow rectifying body 50 is disposed in the space B that is a part of the space A. The space B is a part of a region, in the space A, sandwiched by the first rib 32a and the second rib 32b. In the work machine 10, the flow rectifying body 50 occupies the space B in the space A. In this case, the cooling air CW flowing through the space A does not flow through the space B. Hence, the sectional area of the space A serving as a flow path of the cooling air CW is reduced accordingly by the space B.

The work machine 10 can allow the collision between the cooling air CW and the reinforcing rib 32 to be inhibited by the flow rectifying body 50 filling the space B. When the cooling air CW collides with the reinforcing rib 32, the flow is disturbed and spreads, and the amount of the cooling air CW hitting a desired position of the engine E is reduced. The work machine 10 can allow the contact between the cooling air CW and the reinforcing rib 32 to be inhibited by the flow rectifying body 50 filling the space B that is sandwiched by the first rib 32a and the second rib 32b. Hence, the work machine 10 can allow the air volume of the cooling air CW hitting a desired position of the engine E to be ensured. This makes it possible to inhibit deterioration in the cooling efficiency of the engine E.

### [Effect of sealing portion]

Further, in the work machine 10, the partition plate 34 (inner side surface 35), the first rib 32a, and the second rib 32b include the sealing portion 36. The sealing portion 36 seals a gap between the body portion 51 and the inner side surface 35, a gap between the body portion 51 and the first rib 32a, and a gap between the body portion 51 and the second rib 32b when the body portion 51 is inserted into the space B in the space A.

For example, when the gap is present between the body portion 51 and the inner side surface 35, between the body portion 51 and the first rib 32a, and between the body portion 51 and the second rib 32b, the cooling air CW flows in an unexpected direction through the gap, thereby possibly reducing the air volume of the cooling air CW contributing to cooling the engine E. The work machine 10 of the present embodiment can inhibit, by including the sealing portion 36, the cooling air CW flowing along the body portion 51, the first side plate 51a, and the second side plate 51b from flowing between the body portion 51, and the partition plate 34 (inner side surface 35), the first rib 32a, and the second rib 32b. Hence, the work machine 10 can inhibit reduction of the air volume of the cooling air CW by including the sealing portion 36. According to the work machine 10 having such a configuration, the cooling air CW flowing along the body portion 51 can be reliably rectified by the flow rectifying body 50 and the sealing portion 36, which makes it possible to ensure the air volume of the cooling air CW contributing to cooling the engine E.

### [Another embodiment of flow rectifying body]

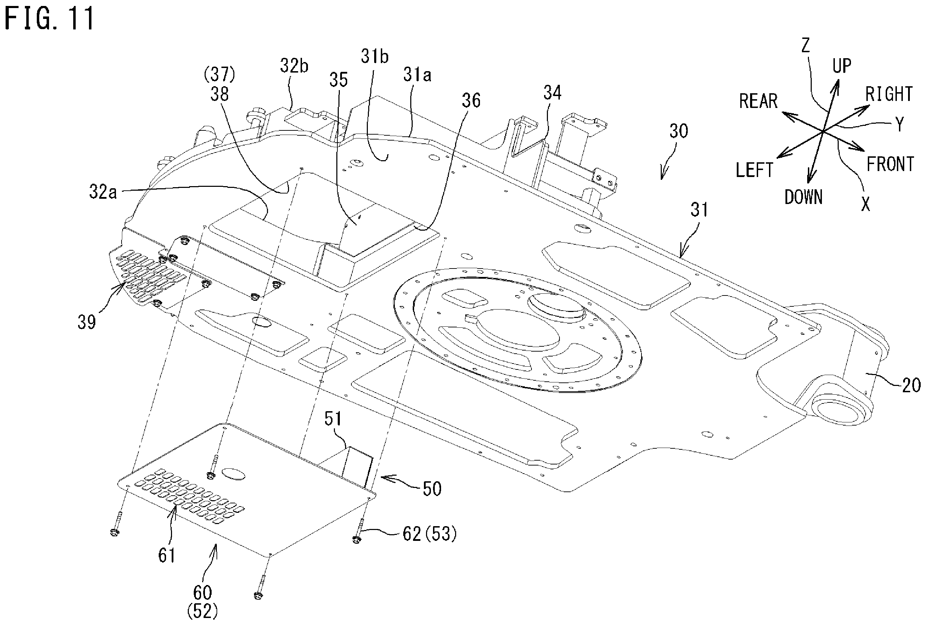

FIG. 11 is a perspective view illustrating an attachment state (when viewed from below) of a flow rectifying body 50 according to another embodiment to a slewing base 31. FIG. 11 illustrates the flow rectifying body 50 according to the other embodiment. As illustrated in FIG. 11, in the work machine 10 of the present disclosure, the flow rectifying body 50 may be configured as an integrated body with an inspection panel 60. The inspection panel 60 illustrated in FIG. 11 is enlarged toward the front side so as to contain a section corresponding to a flange portion 52 (see FIG. 10). The flow rectifying body 50 in FIG. 11 is configured such that the section corresponding to the flange portion 52 (see FIG. 10) and the inspection panel 60 are formed into an integrated body. The flow rectifying body 50 illustrated in FIG. 11 is provided with a body portion 51 provided to the inspection panel 60.

As illustrated in FIG. 11, when the flow rectifying body 50 according to the other embodiment is adopted, an opening 37 and an inspection port 38 may be integrally formed. In other words, in the work machine 10 of the present disclosure, the opening 37 may be provided as a part of the inspection port 38. In a slewing frame 30 illustrated in FIG. 11, the inspection port 38 is enlarged toward the front side so as to contain a section corresponding to the opening 37 (see FIG. 10).

With the work machine 10 including these flow rectifying body 50 and inspection port 38 according to the other embodiment, at the time of inspection of the engine E, merely detaching the inspection panel 60 allows the flow rectifying body 50 to also be removed, and time and effort to separately remove the flow rectifying body 50 can be reduced. Further, since the work machine 10 having such a configuration can reduce the number of bolts 62 for fastening the inspection panel 60 to a lower surface 31b, it is also possible to reduce time and effort to remove the flow rectifying body 50 and the inspection panel 60. Hence, with the work machine 10 including the flow rectifying body 50 and the inspection port 38 having the configuration illustrated in FIG. 11, the maintainability of the flow rectifying body 50 is improved as compared with the case of adopting the flow rectifying body 50 according to the previously-described embodiment.

Furthermore, the work machine 10 having such a configuration allows the area of the inspection port 38 to be expanded by the combined portion of the portion obtained by eliminating the partition (see FIG. 10) between the opening 37 and the inspection port 38 and the portion corresponding to the opening 37 (see FIG. 10), thereby creating room to handle a tool at the time of inspection of the inside of the engine compartment ER, etc., and making it possible to efficiently perform inspection work. Hence, with the work machine 10 including the flow rectifying body 50 and the inspection port 38 having the configuration illustrated in FIG. 11, the maintainability of the engine E is improved as compared with the case of adopting the flow rectifying body 50 according to the previously-described embodiment.

The embodiments are illustrative in all respects and are not restrictive. The scope of the present invention is defined not by the embodiments but by the claims, and includes all modifications within the scope equivalent to the configuration described in the claims.

### REFERENCE SIGNS LIST

- 10: work machine
- 31: slewing base (base)
- 31b: lower surface
- 32: reinforcing rib
- 32a: first rib
- 32b: second rib
- 34: partition plate
- 35: inner side surface
- 36: sealing portion
- 37: opening
- 38: inspection port
- 50: flow rectifying body
- 51: body portion
- 52: flange portion
- 53: bolt (fixing member)
- 60: inspection panel
- E: engine (prime mover)
- ER: engine compartment (prime mover compartment)
- A: space
- B: space

## Claims

1. A work machine comprising:
a machine body including a base and a prime mover compartment formed on the base;
a prime mover housed in the prime mover compartment;
a cooling fan that generates cooling air cooling the prime mover; and
a flow rectifying body that rectifies the cooling air flowing between an inner side wall of the prime mover compartment and the prime mover, wherein
the base is disposed on a lower portion of the machine body, and
the flow rectifying body is inserted into a space between the prime mover and the inner side wall from below the machine body through an opening formed in the base, and is fixed to a lower surface of the base.

2. The work machine according to claim 1, wherein
the flow rectifying body includes
a body portion having a form occupying at least a part of the space in a state in which the body portion is inserted into the space, and
a flange portion located below the base and being in contact with the lower surface of the base around the opening in a state in which the body portion is inserted into the space, in which
the flange portion is fixed to the lower surface of the base with a fixing member attachable to and detachable from the lower surface of the base.

3. The work machine according to claim 1 or 2, comprising a first rib and a second rib that are provided on the base in the prime mover compartment, the first rib and the second rib being parallel to each other and orthogonal to the inner side wall, wherein
the flow rectifying body is inserted into a region, in the space, sandwiched by the first rib and the second rib.

4. The work machine according to claim 3, wherein the inner side wall, the first rib, and the second rib include a sealing portion that seals a gap between the flow rectifying body and the inner side wall, a gap between the flow rectifying body and the first rib, and a gap between the flow rectifying body and the second rib.

5. The work machine according to claim 1 or 2, wherein the inner side wall extends in a left-right direction of the machine body.

6. The work machine according to claim 1 or 2, wherein the cooling fan sends the cooling air in a direction substantially parallel to the inner side wall.

7. The work machine according to claim 1 or 2, further comprising:
an inspection port formed on the base for inspection of the prime mover; and
an inspection panel that covers the inspection port and is installed on the lower surface of the base, wherein
the flow rectifying body is formed into an integrated body with the inspection panel.

8. The work machine according to claim 7, wherein the opening is included in a part of the inspection port.
